Europäisches Patentamt

European Patent Office

Office européen des brevets

(19)

(11) EP 0 561 672 B1

(12) **FASCICULE DE BREVET EUROPEEN**

| | |
|---|---|
| (45) Date de publication et mention<br>de la délivrance du brevet:<br>**09.07.1997 Bulletin 1997/28** | (51) Int Cl.⁶: **H01S 3/06**, G02B 6/12,<br>G02B 6/30, H04B 10/00 |

(21) Numéro de dépôt: **93400623.0**

(22) Date de dépôt: **11.03.1993**

(54) **Amplificateur optique intégré et laser mettant en oeuvre un tel amplificateur**

Integrierter optischer Verstärker und Laser mit einem solchen Verstärker

Integrated optical amplifier and laser utilising such an amplifier

(84) Etats contractants désignés:
**DE FR GB NL**

(30) Priorité: **13.03.1992 FR 9203013**

(43) Date de publication de la demande:
**22.09.1993 Bulletin 1993/38**

(73) Titulaire: **COMMISSARIAT A L'ENERGIE
ATOMIQUE
75015 Paris (FR)**

(72) Inventeur: **Valette, Serge
F-38100 Grenoble (FR)**

(74) Mandataire: **Signore, Robert et al
c/o BREVATOME
25, rue de Ponthieu
75008 Paris (FR)**

(56) Documents cités:
EP-A- 0 440 049       EP-A- 0 474 447
DE-A- 4 120 054

- APPLIED PHYSICS LETTERS. vol. 57, no. 26, 24 Décembre 1990, NEW YORK US pages 2859 - 2861 A.POLMAN ET AL. '1.54 um room-temperature luminescence of MeV erbium-implanted silica glass'
- ELECTRONICS LETTERS. vol. 27, no. 14, 14 Février 1991, ENAGE GB pages 334 - 335 T.KITAGAWA ET AL. 'Guided-wave laser based on erbium-doped silica planar lightwave circuit'
- APPLIED PHYSICS LETTERS. vol. 55, no. 23, 4 Décembre 1989, NEW YORK US pages 2389 - 2391 Y.SHANI ET AL. 'Efficient coupling of a semiconductor laser to an optical fiber by means of a tapered waveguide on silicon'

**Description**

Domaine technique

La présente invention concerne un amplificateur optique intégré et un laser mettant en oeuvre un tel amplificateur. L'invention trouve des applications générales en télécommunications optiques.

Etat de la technique antérieure

Dans le domaine des télécommunications optiques, il est fait usage depuis quelques années d'amplificateurs à fibres optiques, particulièrement avantageux parce qu'ils améliorent considérablement les aspects systèmes.

On peut donc s'attendre dans les années à venir à une influence très forte de ce type de composants combinés entre eux pour former des dispositifs optiques intégrés, à condition bien sûr de savoir les réaliser. Par exemple, l'insertion d'un tel amplificateur dans un diviseur de 1 à N permet d'obtenir N signaux identiques sans perte de puissance entre la voie d'entrée et chacune des voies de sortie prises individuellement.

Dans le domaine des télécommunications optiques des amplificateurs de ce type permettent de transmettre des données optiques sur de grandes distances, avec une atténuation très faible.

De tels amplificateurs sont décrits dans les articles suivants :

- E.K. Mwarania, L. Reekie, J. Wang, J.S. Wilkinson, "Low-threshold monomode ion-exchanged waveguide lasers in neodymium-doped BK-7 glass", Electronics Letters, 2 août 1990, volume 26, N° 16. Cet article décrit des lasers réalisés avec des guides optiques en verre pour lesquels on utilise des verres spéciaux à dopage terre rare, en général erbium. On réalise ces guides en utilisant les méthodes connues d'échange d'ions. Dans de telles méthodes le verre est dopé à la fabrication ; il n'est donc pas possible d'obtenir une plaque ne comprenant que certaines zones limitées qui soient dopées : toute la plaque est obligatoirement dopée ;
- Yoshinori Hibino, Takeshi Kitagawa, Makoto Shimizu, Fumiaki Hanawa et Akio Sugita, "Neodymium-doped silica optical waveguide laser on silicon substrate", IEEE Photonics Technology Letters, volume 1, N° 11, novembre 1989 ;
- K. Kitagawa, K. Hattori, M. Shimizu, Y. Ohmori et M. Kobayashi, "Guided-wave laser based on erbium-doped silica planar lightwave circuit", Electronics Letters, 14 février 1991, volume 27, N° 4. Cet article, ainsi que le précédent, décrit un laser avec des guides optiques en silice dopée obtenue par hydrolyse à la flamme. Le dopant, erbium pour des longueurs d'onde au voisinage de 1,54 $\mu$m ou néodyme pour des longueurs d'ondes au voisinage de 1,06 $\mu$m, est introduit par trempage dans une solution de type chlorure d'erbium avant l'étape de vitrification. Cette opération est rendue possible du fait de la consistance poreuse de la silice (aspect de suie) avant l'étape de vitrification ;
- A. Polman, A. Lidgard, D.C. Jacobson, P.C. Becker, R.C. Kistler, G.E. Blonder et J.M. Poate, "1.54 $\mu$m room-temperature luminescence of MeV erbium-implanted silica glass", Applied Physical Letters 57, 24 décembre 1990. Cet article décrit une méthode d'implantation d'ions erbium sur des guides optiques en silice par la technique CVD ("Chemical Vapor Deposition"). Mais l'utilisation d'une telle méthode est difficilement envisageable pour la réalisation d'amplificateurs intégrés pour les raisons suivantes :

1/ l'implantation d'erbium, ion lourd, à forte profondeur (plusieurs micromètres) nécessite des énergies d'implantation considérables. Par exemple, dans l'article cité précédemment, avec une énergie de 9,5 MeV la profondeur Rp atteinte est de l'ordre de 1,25 $\mu$m et les effets de l'implantation ne sont notables qu'au voisinage de cette profondeur Rp, sur une largeur $\Delta$ Rp de l'ordre de 0,55 $\mu$m,
2/ les guides en silice dopée pour télécommunications optiques utilisent des variations d'indice "coeur-substrat" faibles (quelque $10^{-3}$ à $10^{-2}$) et l'épaisseur du coeur est grande (4 à 8 $\mu$m typiquement) afin de présenter une bonne compatibilité avec les fibres optiques monomodes.

Dans de telles conditions, si l'on veut employer une implantation ionique pour réaliser des amplificateurs optiques par dopage terre rare sur les guides en silice CVD, il faut employer des implantations multiénergies de plusieurs MeV qui nécessitent des équipements très lourds et sont d'un coût prohibitif.

Une demande de brevet européen EP-A-0 474 447 décrit un appareil comprenant un dispositif à gain optique et pompage optique qui comprend un guide d'onde de type "planar" à dopage (RE) terre rare avec une distribution de dopant non uniforme dans le coeur du guide d'onde. Les ions RE sont distribués de telle manière que les ions soient concentrés dans une région de coeur dans laquelle l'intensité de mode des deux radiations de signal et de pompe est assez grande.

Exposé de l'invention

Pour résoudre ces différents problèmes, l'invention propose de réaliser un amplificateur optique intégré par implantation d'ions terre rare sur un guide d'onde utilisant un matériau à très forte différence d'indice $\Delta N$ par rapport aux matériaux adjacents.

On rappelle qu'une structure guide d'onde consiste généralement en une couche tampon, une couche guide et une couche supérieure empilées sur un substrat, la couche guide ayant un indice de réfraction réel supérieur à celui des couches tampon et supérieure. La couche supérieure peut, dans certains cas, être remplacée par de l'air.

La présente invention a pour objet un amplificateur optique intégré comme revendiqué dans la revendication 1.

Avantageusement le guide du premier type comprend une couche supérieure et une couche inférieure en silice et une couche guidante en nitrure de silicium ($Si_3N_4$), ou en oxynitrure de silicium ($SiO_xN_y$). Chaque guide du second type comprend une couche guidante en silice intercalée entre une couche supérieure et une couche inférieure en silice ($SiO_2$), cette couche guidante du guide du second type ayant un indice supérieur à celui des couches inférieure et supérieure, cette condition étant réalisée en dopant convenablement lesdites couches.

Avantageusement si l'on veut émettre ou amplifier la lumière au voisinage de 1,55 µm de longueur d'onde, le dopage terre rare est un dopage à l'erbium. Le dopage terre rare peut être également un codopage choisi parmi les possibilités suivantes : erbium-ytterbium, ou erbium-aluminium, ou erbium-ytterbium-aluminium.

La zone amplificatrice subit, avantageusement, un recuit dans une gamme de températures T telle que : 700°C<T<1200°C. Avantageusement la couche guidante dans la zone intermédiaire est en nitrure de silicium d'épaisseur comprise entre 0,04 et 0,3 µm typiquement pour les longueurs d'onde qui intéressent les télécommunications optiques. Une implantation de quelques centaines de KeV d'ions terre rare suffit alors à faire pénétrer l'ion en question sur une profondeur très voisine des dimensions du guide. La couche guidante dans chaque zone extérieure peut être réalisée en silice dopée par dopage d'au moins l'un des composants suivants : phosphore, bore, azote, germanium ou titane ; ou en silice non dopée ou dopée au fluor, les couches inférieure et supérieure associées étant alors dopées au fluor avec des concentrations moins fortes que celles utilisées dans la couche guidante.

Dans une première configuration, les moyens d'introduction de l'onde de pompe comprennent au moins un guide secondaire réalisé sur le substrat, couplé au guide principal dans tout ou partie de sa zone intermédiaire, ce guide secondaire véhiculant au moins une onde de pompe. Chaque guide secondaire comprend une première partie, couplée à la zone intermédiaire, formée d'un guide du premier type, et au moins une seconde partie formée d'un guide du second type, reliée à la première partie par une transition adiabatique. Dans une telle configuration, la zone amplificatrice est réalisée par implantation dans les guides principal et secondaire au niveau de leur partie couplée.

Dans une seconde configuration, l'amplificateur comprend deux guides secondaires, la zone amplificatrice du guide principal étant disposée dans la zone intermédiaire au moins dans la partie non couplée des guides principal et secondaires et entre les guides secondaires. La zone amplificatrice est implantée uniquement dans le guide principal au niveau de cette zone intermédiaire. Avantageusement, dans la zone amplificatrice le guide principal est réalisé dans un guide ayant la forme d'une spirale, afin d'augmenter la longueur d'amplification sans augmenter notablement le volume du composant.

Dans une autre configuration avantageuse, on réalise un laser mettant en oeuvre un amplificateur selon l'invention, une zone amplificatrice étant située entre deux réseaux optiques qui permettent un retour sur elle-même de la longueur d'onde amplifiée.

Brève description des dessins

- La figure 1 illustre une première configuration d'un amplificateur optique intégré conforme à l'invention ;
- la figure 2 illustre une seconde configuration d'un amplificateur optique intégré conforme à l'invention ;
- la figure 3 illustre une variante de la seconde configuration représentée à la figure 2 ;
- la figure 4 illustre une vue en coupe transversale de la première configuration selon un plan IV-IV représenté à la figure 1 ;
- les figures 5 à 7 illustrent plusieurs caractéristiques de l'amplificateur selon l'invention ;
- la figure 8 illustre un laser mettant en oeuvre un amplificateur selon l'invention ;
- la figure 9 représente des courbes explicatives du fonctionnement de l'amplificateur optique de l'invention ;
- la figure 10 illustre une réalisation avantageuse.

Exposé détaillé des modes de réalisation

Dans la suite de la description, la structure guide $Si/SiO_2/Si_3N_4/SiO_2$ comprenant une couche supérieure et une couche inférieure en silice et une couche guidante en nitrure de silicium sera appelée structure OIS1, la structure guide $Si/SiO_2/SiO_2$ haut indice$/SiO_2$ comprenant une couche supérieure et une couche inférieure en silice et une couche guidante en silice dopée avec des dopants augmentant son indice de réfraction sera appelée structure OIS2.

L'amplificateur optique intégré de l'invention est réalisé par implantation ionique de terre rare, par exemple erbium, sur un guide de type OIS1 qui utilise un matériau à très forte différence d'indice $\Delta$N par rapport aux matériaux adjacents. En effet, on a :

$$n_{SiO_2} \simeq 1,45$$

$$nSi_3N_4 \simeq 2$$

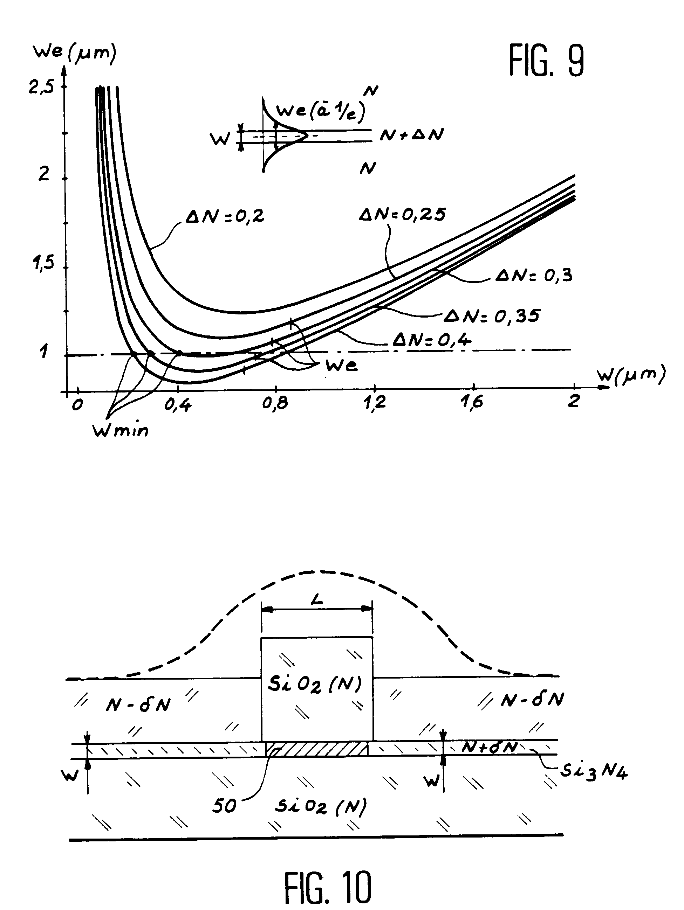

Avantageusement $\Delta$N≥0,3 avec une épaisseur de coeur de guide W telle que : Wmin≤W≤0,4 $\mu$m. Sur la figure 9, est représentée l'évolution de l'épaisseur effective We du mode guidé (We correspond à la largeur de ce mode pour une amplitude mesurée à 1/e par rapport à l'amplitude maximum) en fonction de l'épaisseur du coeur W pour un écart d'indice $\Delta$N donné.

Sur cette figure on voit que, pour avoir une largeur du mode We inférieure à une valeur donnée, il faut choisir une valeur minimale de $\Delta$N (par exemple sur la figure 9, We $\leq$ 1 $\mu$m entraine $\Delta$N $\geq$ 0,3). Dans ces conditions on voit également que W est compris entre une valeur maximum Wmax et une valeur minimum Wmin. Par ailleurs Wmax sera aussi limitée par la profondeur d'implantation accessible avec les énergies d'implantation maximum dont nous disposons. Le choix d'une valeur limite pour We (par exemple 1 $\mu$m dans notre cas) est dicté par le souci d'obtenir un taux d'amplification suffisant (et donc une largeur d'amplification pas trop grande) compte tenu des concentrations d'ions implantés accessibles en pratique.

Il faut alors recuire la zone implantée pour guérir les défauts dus au bombardement et avoir de l'erbium dans une matrice cristalline ($Si_3N_4$ ou SiOxNy...) pas trop perturbée. La température optimum dépend de la nature du matériau constituant la matrice. On peut définir une gamme générale de températures T telle que : 700°C<T<1200°C ; avantageusement avec du nitrure de silicium : 1000°C<T<1200°C.

L'erbium est utilisé car il permet une amplification aux longueurs d'ondes utilisées en télécommunication optique : $\lambda \simeq$ 1,54 $\mu$m. Mais il est possible d'utiliser d'autres terres rares, ou d'utiliser des codopages tels que erbium-ytterbium, ou erbium-aluminium, ou erbium-ytterbium-aluminium ; l'ytterbium permettant d'améliorer l'absorption du faisceau de pompe et l'aluminium permettant d'homogénéiser la réponse spectrale en amplification.

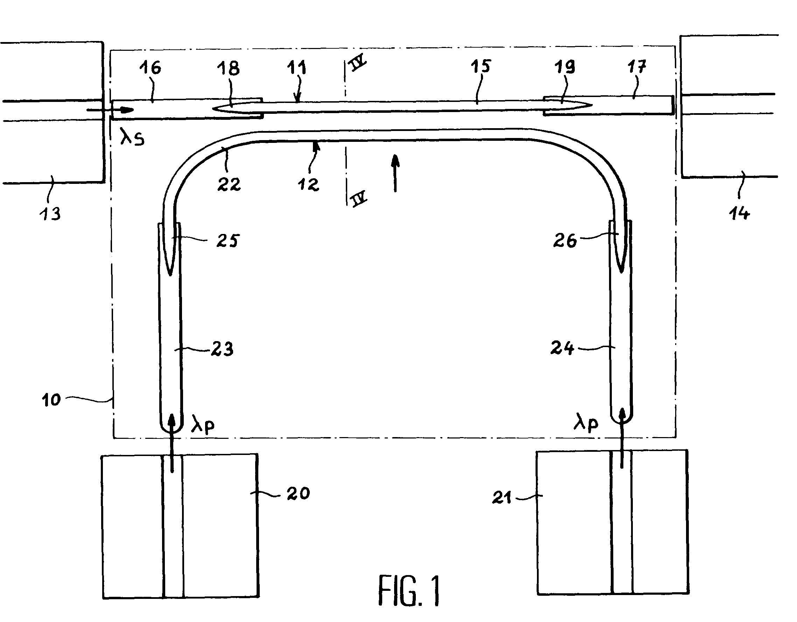

L'amplificateur représenté sur la figure 1 est réalisé sur un substrat 10. Il comprend un guide principal 11 véhiculant le signal à amplifier (longueur d'onde $\lambda$s) auquel est couplé un guide secondaire 12 véhiculant une onde de pompe (longueur d'onde $\lambda$p) dans chaque sens.

Le guide principal, disposé ici entre une fibre optique monomode d'entrée 13 et une fibre optique monomode de sortie 14, comprend une zone intermédiaire 15 ayant une structure de type OIS1 située entre deux zones 16 et 17 ayant une structure de type OIS2. Les deux transitions 18 et 19 entre ces deux types de zones sont des transitions adiabatiques.

Le guide secondaire, disposé ici entre deux diodes laser 20 et 21 comprend, lui aussi, une zone intermédiaire 22 ayant une structure de type OIS1 située entre deux zones 23 et 24 ayant une structure de type OIS2. Les deux transitions 25 et 26 entre ces deux types de zones sont des transitions adiabatiques.

Dans cette première configuration l'utilisation d'un coupleur bidirectionnel n'est pas obligatoire : elle permet seulement d'augmenter l'énergie de pompe et donc d'obtenir une amplification plus forte sur des distances d'interaction plus courtes.

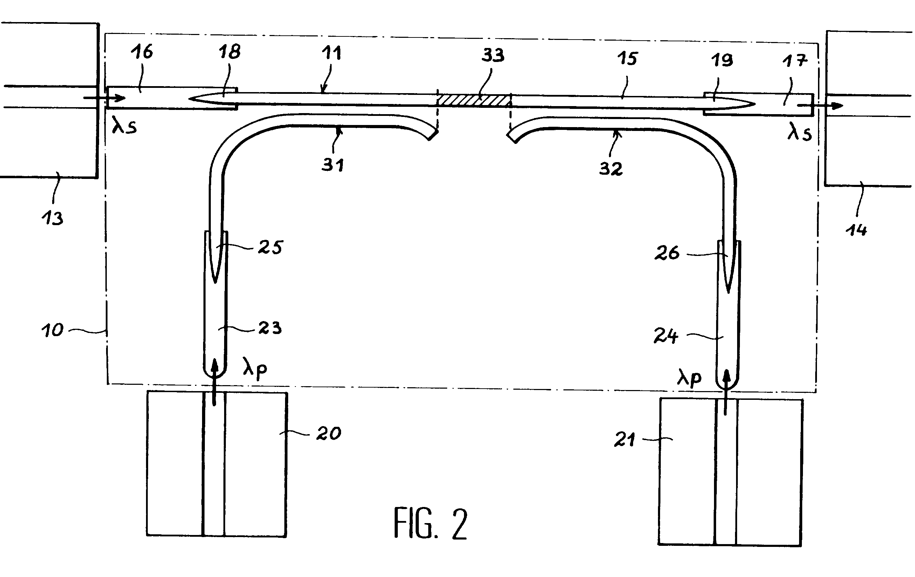

Dans la seconde configuration représentée à la figure 2, le coupleur bidirectionnel 11-12 de la figure 1 est remplacé par deux coupleurs séparés 11-31, 15-32.

Le choix de l'une ou l'autre de ces deux configurations dépend des coefficients d'amplification gs (pour la longueur d'onde du signal à amplifier) et d'absorption $\alpha$p (pour la longueur d'onde de pompe $\lambda$p) et des caractéristiques des coupleurs désirés.

Si les coefficients d'amplification et d'absorption gs et $\alpha$p sont grands et donc si la longueur d'absorption LA du faisceau pompe (LA $\simeq$ 1/ $\alpha$p) est faible (quelques millimètres au moins), la première configuration, représentée à la figure 1, est plus avantageuse.

Si au contraire la longueur d'absorption LA est grande (plusieurs centimètres ou plus), la seconde configuration, représentée à la figure 2, avec deux coupleurs indépendants est plus favorable.

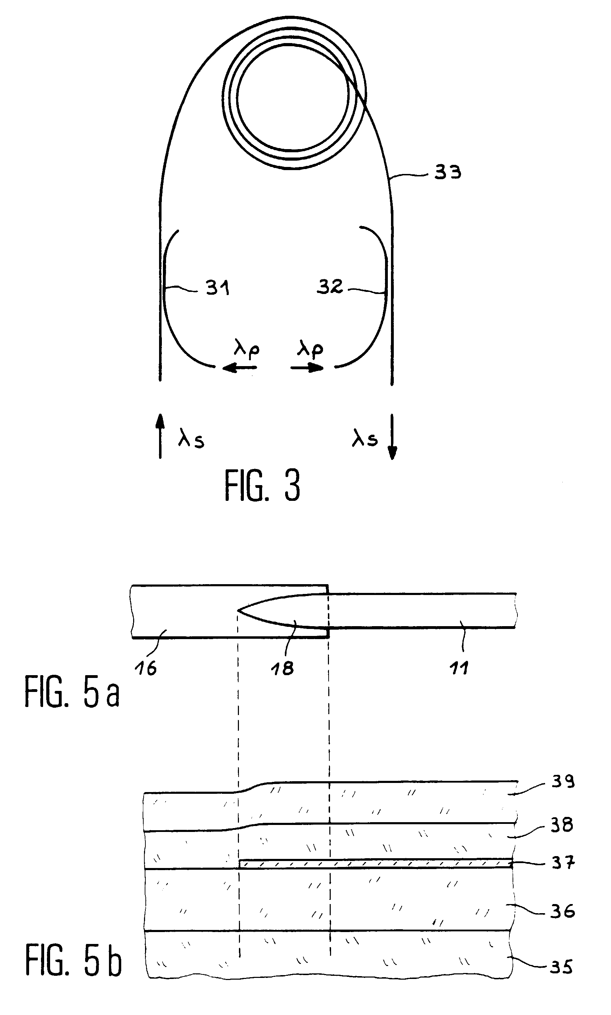

Dans la seconde configuration la zone intermédiaire 33 peut favorablement être choisie pour optimiser l'amplification. Si l'amplification est faible cette zone 33 aura intérêt à être la plus grande possible. Elle pourra par exemple prendre la forme d'un guide "spirale" tel que représenté sur la figure 3, qui permet d'obtenir de grandes longueurs de guidage, par exemple de l'ordre du mètre, sans augmentation notable de la taille du dispositif.

La structure représentée à la figure 4 est une vue en coupe du coupleur utilisé dans les deux configurations, par exemple selon le plan de coupe IV-IV de la figure 1. Le substrat 35 est en silicium monocristallin. La couche tampon 36 est en oxyde de silicium d'indice n2 de 2 à 15 µm d'épaisseur, obtenue par oxydation thermique haute pression du substrat ou par dépôt chimique en phase vapeur assisté par un plasma (PECVD). La couche guide 37 est une couche de nitrure de silicium de 50 à 500 nm d'épaisseur, obtenue par dépôt chimique en phase vapeur basse pression (LPCVD) ou assisté par un plasma (PECVD). Les deux surplots 38 de confinement latéral de la lumière sont des couches d'oxyde de silicium d'indice n1 voisin ou égal à n2, de 0,5 à 5µm déposées par PECVD ou LPCVD. La couche de diélectrique 39 est une couche diélectrique d'indice nD<n1. La silice a un premier indice réel n1 de 1,45 environ, le diélectrique un indice réel nD de 1,40 environ, et le nitrure de silicium un indice voisin de 2.

Le fait d'associer un guide de type OIS1 à un guide de type OIS2, via une transition adiabatique, permet de rendre un guide de type OIS1 compatible avec une fibre optique monomode standard. Dans un guide de type OIS2, c'est-à-dire de structure $Si/SiO_2/SiO_2$ haut indice/$SiO_2$, l'oxyde de silicium ou silice ($SiO_2$) haut indice peut être obtenu par dopage de bore, d'azote, de phosphore, germanium ou titane... ou par absence de dopage si la silice environnante est dopée par un dopant qui diminue l'indice de réfraction (fluor...).

Les zones de transition adiabatiques, qui peuvent être réalisées comme décrit dans le document "Applied Physical Letters" 55 (23) du 4 décembre 1989, pages 2389-2391, de Y. Shani et al. "Efficient coupling of a semiconductor laser to an optical fiber by means of a tapered waveguide on silicon", permettent de coupler efficacement (90 % ou plus) de la lumière d'un guide du type OIS1 vers un guide de type OIS2 correspondant et inversement.

Une transition de ce type est représentée sur les figures 5a et 5b, respectivement en représentation schématique et en coupe longitudinale.

La transition représentée permet donc par exemple de passer d'un guide 11 de type OIS1 à un guide 16 de type OIS2. On retrouve sur ces figures 5a et 5b les couches déjà représentées en figure 4.

Le guide 11 comporte un substrat 35 en silicium monocristallin recouvert d'une couche de confinement inférieure 36 en oxyde de silicium ($SiO_2$). Sur cette couche on trouve une couche guidante 37 en nitrure de silicium définissant le guide 11, et deux couches successives de confinement, la première 38 ayant un dopage tel que l'indice soit supérieur à celui de la couche 36 et celui de la couche 39. Dans chaque guide 11 (16), et également dans la zone de transition 18, la couche de guidage présente un indice de réfraction supérieur à celui des couches qui l'entourent.

Dans la zone adiabatique la couche guidante 37 en nitrure de silicium a une largeur qui diminue progressivement vers zéro.

Le guide OIS2 peut être gravé ou non suivant le pointillé à la fin de la zone de transition.

Dans les deux configurations représentées aux figures 1 et 2 les transitions adiabatiques 18 et 19 sont indispensables car on doit recoupler la lumière sur des fibres optiques monomodes, par exemple des fibres optiques 13 et 14. Pour réaliser ces connexions fibres optiques-guides optiques, on peut avantageusement utiliser le procédé décrit dans la demande de brevet français N° 90 02575 du 1er mars 1990.

Par contre les transitions adiabatiques 25 et 26 ne sont pas indispensables. Mais elles permettent de coupler les diodes laser de pompe 20 et 21 dans les guides 23 et 24 de type OIS2, ce qui a pour effet de faciliter le couplage du point de vue sensibilité de positionnement. Il est cependant tout à fait envisageable de supprimer ces deux transitions 25 et 26 et d'utiliser un couplage direct entre les diodes de pompe 20 et 21 et le guide 22 (ou l'un des guides 31 et 32) de type OIS1.

Dans un exemple de réalisation de l'amplificateur optique intégré selon l'invention, la zone intermédiaire 15 a les caractéristiques suivantes :

- coeur en nitrure de silicium d'épaisseur 0,16 µm,
- implantation erbium.

On peut utiliser une énergie 300 KeV, dose $\simeq 10^{14} cm^{-2}$ à $10^{15} cm^{-2}$

$$Rp \simeq 0,11 \; \mu m$$

$$\Delta Rp \simeq 0,005 \; \mu m$$

On peut également réaliser une implantation multiénergie telle que :

$$E_1 \simeq 50 \; KeV$$

$$E_2 \simeq 120 \text{ KeV}$$

$$E_3 \simeq 300 \text{ KeV}$$

Une telle implantation couvre à peu près toute l'épaisseur du guide et assure donc une concentration homogène et forte d'erbium dans tout le coeur et une amplification efficace de la lumière dans la bande spectrale correspondante.

Un recuit reste cependant nécessaire pour éliminer les défauts dus au bombardement ionique et rendre les ions terre rare actifs.

Les paramètres de tels recuits sont connus et se situent à des températures de l'ordre de 600 à 1000°C pendant des durées de 30' à 3 heures suivant le degré d'amélioration souhaité et de la dose d'implantation choisie.

Pour simplifier l'explication qui va suivre, seule la première configuration sera prise en compte, le coupleur considéré étant alors unidirectionnel. Une explication analogue pourrait être tout aussi bien développée pour la première configuration avec un coupleur bidirectionnel, ou pour la seconde configuration.

La longueur d'onde du signal optique à amplifier $\lambda$s est ici égale ou voisine de 1,54 $\mu$m.

La longueur d'onde de pompe $\lambda$p peut être choisie assez librement dans le spectre d'absorption du nitrure de silicium $Si_3N_4$ dopé à l'erbium.

Il n'est bien sûr pas possible que les coupleurs puissent, par exemple, garder en permanence toute l'énergie du signal à la longueur d'onde signal $\lambda$s dans le guide principal 11 et d'amener toute l'énergie de pompe à la longueur d'onde de pompe $\lambda$p du guide secondaire 12 au guide principal 11. En pratique, le coupleur réalise un échange à la fois pour les longueurs d'onde $\lambda$s et $\lambda$p.

Si on néglige les coefficients de perte $\alpha$p et d'amplification gs, la réponse d'un coupleur est de la forme suivante bien connue :

1/ pour la longueur d'onde de signal $\lambda$s :

- dans le guide principal : $I_S^1 = I_{SO} \cos^2 K_{sz}$
- dans le guide secondaire : $I_S^2 = I_{SO} \sin^2 K_{sz}$

2/ pour le longueur d'onde de pompe $\lambda$p :

- dans le guide principal : $I_p^1 = I_{po} \sin^2 K_{pz}$
- dans le guide secondaire : $I_p^2 = I_{po} \cos^2 K_{pz}$

Ks et Kp sont les coefficients de couplage aux longueurs d'ondes $\lambda$s et $\lambda$p.

Les longueurs de couplage correspondantes, c'est-à-dire les longueurs pour lesquelles il y a échange complet d'énergie entre les guides principal et secondaire, sont

$$L_p = \pi/2Kp \qquad Ls = \pi/2Ks$$

Etant donné que la longueur d'onde de pompe $\lambda$p est plus faible que la longueur d'onde de signal $\lambda$s, la longueur de couplage Lp sera généralement plus grande que la longueur de couplage Ls pour une configuration de coupleur donnée. On choisit avantageusement la longueur d'interaction du coupleur $L_I$ (distance pour lequel il y échange d'énergie lumineuse entre les deux guides) telle que :

$$L_I \simeq Lp = 2Ls$$

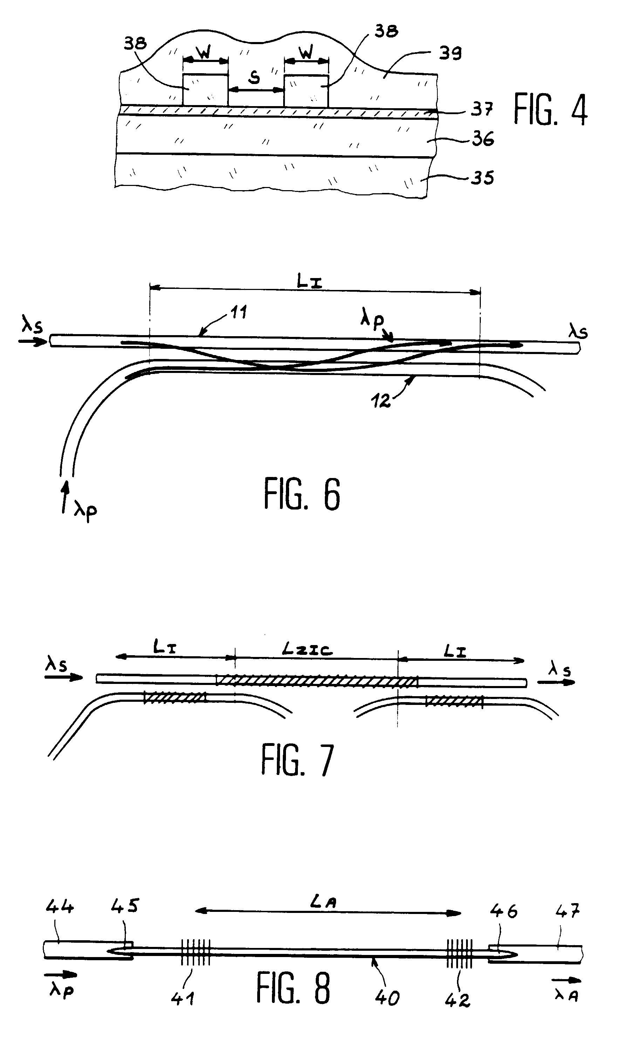

Les échanges d'énergie entre les guides principal et secondaire sont donc alors schématisés par le diagramme de la figure 6.

Sur la longueur $L_I$, l'énergie de signal ($\lambda$s) passe du guide principal 11 au guide secondaire 12, puis revient dans le guide principal 11.

Sur la même longueur $L_I$ l'énergie de pompe ($\lambda$p) passe du guide secondaire 12 au guide principal 11 suivant les formules données plus haut (si $\alpha$p et gs sont faibles, ce qui sera en général le cas).

On peut considérer l'exemple chiffré suivant (en faisant référence à la figure 4) :
avec

$$\lambda s = 1,55 \ \mu m$$

$$\lambda p = 0,98 \ \mu m$$

on obtient

$$n_{SiO_2} = 1,45 \ \text{à} \ 0,98 \ \mu m \ ;$$

et

$$n_{SiO_2} = 1,44 \ \text{à} \ 1,55 \ \mu m$$

$$n_{Si_3N_4} = 1,98 \quad \begin{cases} 1,986 \ \text{à} \ 0,98 \ \mu m \\ 1,976 \ \text{à} \ 1,55 \ \mu m \end{cases}$$

$$nD = 1 \ (air)$$

$$W = 1 \ \mu m$$

$$S = 0,8 \ \mu m$$

$$L_p = L_I = 88,6 \ \mu m \Rightarrow L_I$$

sera plus important avec nD=1,40, S de l'ordre de 1 à 8 µm et W de 1 à 8 µm.

Ceci n'est qu'un exemple, il existe une infinité de solutions.

Il est clair que les zones d'implantation utiles seront toujours celles où il y a à la fois le faisceau de signal et le faisceau de pompe.

Dans la première configuration de la figure 1, l'implantation a lieu au niveau du coupleur et affecte à la fois les guides principal 11 et secondaire 12.

Dans la deuxième configuration de la figure 2, la zone implantée sera favorablement la zone intermédiaire 33 et n'affecte que le guide principal 11.

Bien entendu des configurations intermédiaires peuvent être utilisées pour tenir compte de cas pratiques qui se situent entre les configurations des figures 1 et 2 avec des zones intercoupleur de longueur $L_{ZIC}$ pas très différentes des longueurs d'interaction des coupleurs $L_I$.

Des implantations localisées convenablement entre les guides 11 et 12 peuvent alors être favorables.

Si $L_{ZIC} \simeq L_I$ on peut avoir la configuration représentée à la figure 7. Sur cette figure les zones implantées peuvent avoir l'emplacement des zone hachurées.

Dans toutes les configurations selon l'invention, la zone amplificatrice est avantageusement implantée sur les portions de guide où les ondes de signal et de pompe sont présentes de manière notable. Si l'une ou l'autre de ces ondes est absente ou simplement faible dans la portion considérée, l'implantation ionique ne fera qu'augmenter l'absorption d'une ou de ces deux ondes, ce qui est préjudiciable au rendement global de l'amplificateur.

Pour réaliser la zone intermédiaire 15 du guide principal 11, le guide le plus favorable est de type OIS1 avec un coeur en nitrure de silicium. Toutefois, on peut envisager un procédé analogue avec des guides de coeur SiOxNy dont l'indice serait suffisamment élevé (nSiOxNy > 1,75).

Une structure OIS1 de type avantageux est représentée sur la figure 10, avec une zone amplificatrice 50. Elle permet, en effet, d'obtenir une amplification insensible à la polarisation : c'est-à-dire obtenir une amplification voisine dans les deux polarisations TE et TM à condition que $\delta N \leq 5 \times 10^{-2}$.

L'épaisseur des couches adjacentes au coeur est considérée comme infinie, c'est-à-dire supérieure à la pénétration de l'onde évanescente dans ces couches ; en pratique cette épaisseur est de l'ordre de un à quelques microns. Cette structure de microguide peut être limitée, comme représenté sur la figure 10, avec les valeurs numériques suivantes :

$$N \sim 1{,}45$$

$$\Delta N \sim 0{,}55$$

$$\delta N \sim 2.10^{-2}$$

$$L \sim 4 \ \mu m$$

$$W \sim 0{,}3\text{-}0{,}4 \ \mu m.$$

La couche supérieure est composée d'une couche centrale d'indice N gravée de façon à définir la largeur L du coeur en $Si_3N_4$ et d'une couche d'indice N-$\delta$N disposée soit de part et d'autre de la couche centrale, soit recouvrant celle-ci.

L'amplificateur de l'invention décrit précédemment peut être utilisé pour réaliser un laser, tel que représenté sur la figure 8. On introduit alors un élément optique capable de jouer le rôle de résonateur et l'on supprime le signal de longueur d'onde $\lambda$s. Avantageusement les éléments résonateurs peuvent être réalisés par des réseaux 41 et 42 dont le pas p est calculé pour assurer un retour de la lumière amplifiée dans le milieu amplificateur 40. Le signal optique en entrée est véhiculé par un guide 44 de type OIS2 et transite par une transition adiabatique 45 avant d'atteindre le réseau 41. Le signal optique en sortie du second réseau 42 est véhiculé par un guide 46 de type OIS2 après passage dans une transition adiabatique 47. En pratique, il est bien connu que le pas p est égal à :

$$p = \lambda A / 2nA$$

$\lambda$A étant ici la longueur d'onde de lumière émise dans la partie amplificatrice 40 (qui aura donc le même rôle que $\lambda$s dans le cas précédent) et nA l'indice effectif du mode guide dans le guide de lumière.

Bien entendu dans cette configuration les coupleurs ne sont plus nécessaires car il n'y a plus de signal de longueur d'onde $\lambda$s mais seulement un signal de sortie à la longueur d'onde $\lambda$A fourni par la partie amplificatrice de longueur LA.

La longueur d'onde de pompe $\lambda$p peut donc être directement injectée dans le guide principal suivant les moyens décrits précédemment.

Les réseaux 41 et 42 permettent un retour sur elle-même de la longueur d'onde amplifiée $\lambda$A mais transmettent intégralement le signal de pompe $\lambda$p.

La zone implantée amplificatrice 40 est comprise entre ces réseaux 41 et 42 et sa longueur LA est optimisée en fonction du coefficient d'amplification g désiré. En pratique, on s'arrange pour que cette longueur LA corresponde à peu près à la longueur sur laquelle le coefficient g reste positif, c'est-à-dire la longueur pour laquelle le faisceau de pompe produit une inversion de population suffisante pour assurer un gain d'amplification supérieur aux pertes de propagation du faisceau à amplifier.

Dans le cas de l'amplificateur de l'invention, l'implantation d'erbium est favorable car elle conduit à une amplification de lumière autour de la longueur d'onde 1,54 $\mu$m qui est celle choisie pour les communications optiques. Dans le cas des lasers d'autres longueurs d'ondes d'émission peuvent être intéressantes : l'implantation d'erbium peut donc être remplacée par une implantation d'un autre élément dans la mesure où la lumière émise en excitant les transitions radiatives par la lumière de pompe se situe dans une zone de transparence des guides considérés non implantés.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1. Amplificateur optique intégré comprenant sur un substrat (10) en silicium, un guide principal (11) qui reçoit, en une première extrémité, un signal d'entrée et qui délivre, en une seconde extrémité, un signal de sortie, dans lequel ce guide principal (11) comporte une zone intermédiaire (15) entourée de deux zones extérieures (16, 17) avec des transitions adiabatiques (18, 19) disposées entre ces différentes zones, dans lequel la zone intermédiaire forme un guide d'un premier type comprenant une couche guidante (37), une couche inférieure (36) et une couche supérieure (39) entre lesquelles la couche guidante est intercalée, dans lequel les deux zones extérieures (16, 17) forment chacune un guide d'un second type comprenant une couche guidante intercalée entre une couche supérieure et une couche inférieure, cette couche guidante ayant un indice supérieur à celui des couches inférieure et supérieure, dans lequel le guide principal est associé à des moyens d'introduction d'une onde de pompe, et dans lequel le guide du second type permet de vendre le guide du premier type compatible avec une fibre monomode (13,14), caractérisé en ce que la couche guidante (37) de la zone intermédiaire utilise un matériau à très forte différence d'indice $\Delta N \geq 0,3$ par rapport à la couche supérieure (39) et la couche inférieure (36), et en ce que la zone intermédiaire (15) comprend une zone amplificatrice dans laquelle la couche guidante est dopée ou codopée par implantation ionique d'au moins une terre rare telle que la concentration des ions est homogène dans la couche guidante située dans la zone amplificatrice.

2. Amplificateur selon la revendication 1, caractérisé en ce que le guide du premier type comprend une couche supérieure (39) et une couche inférieure (36) en silice et une couche guidante (37) en nitrure de silicium ou en oxynitrure de silicium $SiO_xN_y$, et en ce que chaque guide du second type comprend une couche guidante en silice intercalée entre une couche supérieure (39) et une couche inférieure (36) en silice, cette couche guidante du guide du second type ayant un indice supérieur à celui des couches inférieure et supérieur, cette condition étant réalisée en dopant convenablement lesdites couches.

3. Amplificateur selon la revendication 1, caractérisé en ce que le dopage terre rare est un dopage à l'erbium.

4. Amplificateur selon la revendication 1, caractérisé en ce que le dopage terre rare est un codopage choisi parmi les possibilités suivantes : erbium-ytterbium, ou erbium-aluminium, ou erbium-ytterbium-aluminium.

5. Amplificateur selon la revendication 2, caractérisé en ce que la couche guidante (37) dans la zone intermédiaire (15) est en nitrure de silicium d'épaisseur comprise entre 0,04 et 0,3 micromètres.

6. Amplificateur selon la revendication 2, caractérisé en ce que la couche guidante (38) dans chaque zone extérieure (16; 17) est réalisée en silice dopée par dopage d'un au moins des composants suivants : phosphore, germanium, titane, bore et azote.

7. Amplificateur selon la revendication 2, caractérisé en ce que la couche guidante (38) dans chaque zone extérieure (16, 17) est réalisée en silice non dopée ou dopée au fluor, les couches inférieure et supérieure associées étant dopées au fluor avec des concentrations moins fortes que celles utilisées dans la couche guidante.

8. Amplificateur selon la revendication 1, caractérisé en ce que les moyens d'introduction de l'onde de pompe comprennent au moins un guide secondaire (12) réalisé sur le substrat et couplé au guide principal (11) dans tout ou partie de sa zone intermédiaire, ce guide secondaire véhiculant au moins une onde de pompe.

9. Amplificateur selon la revendication 1, caractérisé en ce que chaque guide secondaire (12 ; 31, 32) comprend une première partie couplée à la zone intermédiaire, formée d'un guide du premier type.

10. Amplificateur selon la revendication 8, caractérisé en ce que chaque guide secondaire (12 ; 31, 32) comporte au moins une seconde partie formée d'un guide du second type reliée (23, 24 ; 31, 32) à la première partie par une transition adiabatique (25, 26).

11. Amplificateur selon l'une quelconque des revendications 8 à 10, caractérisé en ce qu'il comprend un seul guide secondaire (12), la zone amplificatrice étant réalisée par implantation dans les guides principal (11) et secondaire (12) au niveau de leurs parties couplées.

12. Amplificateur selon l'une quelconque des revendications 8 à 10, caractérisé en ce que la zone amplificatrice est implantée uniquement dans le guide principal (11) au niveau de cette zone intermédiaire (33).

13. Amplificateur selon l'une quelconque des revendications 6 à 8, caractérisé en ce qu'il comprend deux guides secondaires (31, 32), la zone amplificatrice du guide principal étant disposée dans la zone intermédiaire au moins dans la partie non couplée des guides principal et secondaires et entre les deux guides secondaires.

14. Amplificateur selon l'une quelconque des revendications 12 ou 13, caractérisé en ce que le guide principal (11) dans la zone amplificatrice est réalisé dans un guide (33) ayant la forme d'une spirale.

15. Amplificateur selon la revendication 2, caractérisé en ce que le guide du premier type a une couche supérieure comprenant une couche centrale d'indice N entourée de deux couches d'indice N-δN assurant le confinement latéral, telles que $\delta N \leq 5.10^{-2}$.

16. Laser mettant en oeuvre un amplificateur selon l'une quelconque des revendications 1 à 15, caractérisé en ce que la zone amplificatrice (40) est située entre deux réseaux optiques (41, 42) qui permettent un retour sur elle-même de la longueur d'onde amplifiée.

## Patentansprüche

1. Integrierter optischer Verstärker, auf einem Silciumsubstrat (10) einen Hauptleiter (11) umfassend, der an einem ersten Ende ein Eingangssignal empfängt und an einem zweiten Ende ein Ausgangssignal liefert, bei dem dieser Hauptleiter (11) eine Zwischenzone (15) umfaßt, umgeben von zwei Außenzonen (16, 17) mit adiabatischen Übergängen (18, 19), angeordnet zwischen diesen verschiedenen Zonen, bei dem die Zwischenzone einen Leiter eines ersten Typs bildet, eine leitende Schicht (37), eine untere Schicht (36) und eine obere Schicht (39) umfassend, zwischen die die leitende Schicht eingefügt ist, bei dem die beiden Außenzonen (16, 17) jeweils einen Leiter eines zweiten Typs bilden, eine zwischen eine obere Schicht und eine untere Schicht eingefügte leitende Schicht umfassend, wobei diese leitende Schicht eine höheren Brechzahl als die untere und die obere Schicht aufweist, bei dem der Hauptleiter verbunden ist mit Einrichtungen zum Einspeisen einer Pumpwelle, und bei dem der Leiter des zweiten Typs ermöglicht, den Leiter des ersten Typs kompatibel zu machen mit einer Monomode-Faser (13, 14),
   **dadurch gekennzeichnet,**
   daß für die leitende Schicht (37) der Zwischenzone ein Material mit einer sehr großen Brechzahldifferenz $\Delta N \geq 0,3$ in bezug auf die obere Schicht (39) und die untere Schicht (36) verwendet wird, und dadurch, daß die Zwischenzone (15) eine Verstärkerzone umfaßt, in der die leitende Schicht dotiert oder kodotiert ist durch Ionenimplantation von wenigstens einer seltenen Erde, so daß die Ionenkonzentration in der in der Verstärkerzone befindlichen leitenden Schicht homogen ist.

2. Verstärker nach Anspruch 1, dadurch gekennzeichnet, daß der Leiter des ersten Typs eine obere Schicht (39) und eine untere Schicht (36) aus Siliciumdioxid und eine leitende Schicht (37) aus Siliciumnitrid oder aus Siliciumoxinitrid $SiO_xN_y$ umfaßt, und dadurch, daß jeder Leiter des zweiten Typs eine leitende Schicht aus Siliciumdioxid umfaßt, eingefügt zwischen eine obere Schicht (39) und eine untere Schicht (36) aus Siliciumdioxid, wobei diese leitende Schicht des zweiten Typs eine höhere Brechzahl aufweist als die untere und die obere Schicht und diese Bedingung hergestellt wird durch geeignetes Dotieren der besagten Schichten.

3. Verstärker nach Anspruch 1, dadurch gekennzeichnet, daß die Seltene-Erden-Dotierung eine Erbium-Dotierung ist.

4. Verstärker nach Anspruch 1, dadurch gekennzeichnet, daß die Seltene-Erden-Dotierung eine Kodotierung ist, ausgewählt unter den folgenden Möglichkeiten:
   Erbium-Yttrium oder Erbium-Aluminium oder Erbium-Yttrium-Aluminium.

5. Verstärker nach Anspruch 2, dadurch gekennzeichnet, daß die leitende Schicht (37) in der Zwischenzone (15) aus Siliciumnitrid eine zwischen 0,04 und 0,3μm enthaltene Dicke aufweist.

6. Verstärker nach Anspruch 2, dadurch gekennzeichnet, daß die leitende Schicht (38) in jeder Außenzone (16; 17) aus dotiertem Siliciumdioxid hergestellt ist, dotiert mit wenigstens einem der folgenden Bestandteile: Phosphor, Germanium, Titan, Bor und Stickstoff.

7. Verstärker nach Anspruch 2, dadurch gekennzeichnet, daß die leitende Schicht (38) in jeder Außenzone (16, 17) hergestellt ist aus nichtdotiertem oder mit Fluor dotiertem Siliciumdioxid, wobei die zugeordneten unteren und oberen Schichten mit Fluor mit weniger starken Konzentrationen als denjenigen dotiert sind, die bei der leitenden Schicht angewendet werden.

8. Verstärker nach Anspruch 1, dadurch gekennzeichnet, daß die Einrichtungen zum Einspeisen der Pumpwelle wenigstens einen Sekundärleiter (12) umfassen, hergestellt auf dem Substrat und über die Gesamtheit oder einen Teil seiner Zwischenzone gekoppelt mit dem Hauptleiter (11), wobei dieser Sekundärleiter wenigstens eine Pumpwelle leitet.

9. Verstärker nach Anspruch 1, dadurch gekennzeichnet, daß jeder Sekundärleiter (12; 31, 32) einen ersten, mit der Zwischenzone gekoppelten Teil umfaßt, gebildet durch einen Leiter des ersten Typs.

10. Verstärker nach Anspruch 8, dadurch gekennzeichnet, daß jeder Sekundärleiter (12; 31, 32) einen zweiten, durch einen Leiter des zweiten Typs gebildeten (23, 24; 31, 32) Teil umfaßt, der mit dem ersten Teil durch einen adiabatischen Übergang (25, 26) verbunden ist.

11. Verstärker nach einem der Ansprüche 8 bis 10, dadurch gekennzeichnet, daß er einen einzigen Sekundärleiter (12) umfaßt, wobei die Verstärkerzone hergestellt wird durch Implantation im Hauptleiter (11) und Sekundärleiter (12) in Höhe ihrer gekoppelten Teile.

12. Verstärker nach einem der Ansprüche 8 bis 10, dadurch gekennzeichnet, daß die Verstärkerzone nur im Hauptleiter (11) implantiert ist, in Höhe dieser Zwischenzone (33).

13. Verstärker nach einem der Ansprüche 6 bis 8, dadurch gekennzeichnet, daß er zwei Sekundärleiter (31, 32) umfaßt, wobei die Verstärkerzone des Hauptleiters in der Zwischenzone angeordnet ist, wenigstens in dem Teil, in dem Haupt- und Sekundärleiter nicht gekoppelt sind und zwischen den beiden Sekundärleitern.

14. Verstärker nach einem der Ansprüche 12 oder 13, dadurch gekennzeichnet, daß der Hauptleiter (11) in der Verstärkerzone in einem Leiter (33) realisiert ist, der die Form einer Spirale hat.

15. Verstärker nach Anspruch 2, dadurch gekennzeichnet, daß der Leiter des ersten Typs eine obere Schicht aufweist, die eine zentrale Schicht mit der Brechzahl N umfaßt, umgeben von zwei Schichten mit der Brechzahl N-$\delta$N, welche die seitliche Einschliessung sicherstellen, z.B. $\delta$N $\leq$ 5.10$^{-2}$.

16. Laser mit einem Verstärker nach einem der Ansprüche 1 bis 15, dadurch gekennzeichnet, daß die Verstärkerzone (40) sich zwischen zwei optischen Rastern bzw. Gittern (41, 42) befindet, die eine Rückkehr der verstärkten Wellenlänge zu bzw. auf sich selbst ermöglicht.

## Claims

1. Integrated optical amplifier comprising on a silicon substrate (10), a main guide (11) which receives, at a first end, an input signal and which delivers, at a second end, an output signal, in which this main guide (11) includes an intermediate region (15) surrounded by two outer regions (16, 17) with adiabatic transitions (18, 19) arranged between these various regions, in which the intermediate region forms a guide of a first type comprising a guiding layer (37), a lower layer (36) and an upper layer (39) between which the guiding layer is interposed, in which the two outer regions (16, 17) each form a guide of a second type comprising a guiding layer interposed between an upper layer and a lower layer, this guiding layer having an index greater than that of the lower and upper layers, in which the main guide is associated with means for introducing a pump wave, and in which the guide of the second type makes it possible to render the guide of the first type compatible with a monomode fibre (13, 14), characterized in that the guiding layer (37) of the intermediate region uses a material with very high difference of index $\Delta N \geq 0.3$ with respect to the upper layer (39) and the lower layer (36), and in that the intermediate region (15) comprises an amplifying region in which the guiding layer is doped or codoped by ion implantation of at least one rare earth, such that the concentration of ions is homogeneous within the guiding layer situated in the amplifying region.

2. Amplifier according to Claim 1, characterized in that the guide of the first type comprises an upper layer (39) and a lower layer (36) made of silica and a guiding layer (37) made of silicon nitride or silicon oxinitride $SiO_xN_y$, and

in that each guide of the second type comprises a guiding layer made of silica interposed between an upper layer (39) and a lower layer (36) made of silica, this guiding layer of the guide of the second type having an index greater than that of the lower and upper layers, this condition being realized by suitably doping the said layers.

3. Amplifier according to Claim 1, characterized in that the rare earth doping is an erbium doping.

4. Amplifier according to Claim 1, characterized in that the rare earth doping is a codoping chosen from the following possibilities: erbium-ytterbium, or erbium-aluminium, or erbium-ytterbium-aluminium.

5. Amplifier according to Claim 2, characterized in that the guiding layer (37) in the intermediate region (15) is made of silicon nitride with a thickness of between 0.04 and 0.3 micrometres.

6. Amplifier according to Claim 2, characterized in that the guiding layer (38) in each outer region (16; 17) is made from doped silica by doping with one at least of the following components: phosphorus, germanium, titanium, boron and nitrogen.

7. Amplifier according to Claim 2, characterized in that the guiding layer (38) in each outer region (16, 17) is made from undoped or fluorine-doped silica, the associated lower and upper layers being fluorine-doped at lower concentrations than those used in the guiding layer.

8. Amplifier according to Claim 1, characterized in that the means of introducing the pump wave comprise at least one secondary guide (12) made on the substrate and coupled to the main guide (11) in all or part of its intermediate region, this secondary guide conveying at least one pump wave.

9. Amplifier according to Claim 1, characterized in that each secondary guide (12; 31, 32) comprises a first part coupled to the intermediate region, formed by a guide of the first type.

10. Amplifier according to Claim 8, characterized in that each secondary guide (12; 31, 32) includes at least one second part formed by a guide of the second type connected (23, 24; 31, 32) to the first part by an adiabatic transition (25, 26).

11. Amplifier according to any one of Claims 8 to 10, characterized in that it comprises a single secondary guide (12), the amplifying region being made by implantation in the main (11) and secondary (12) guides in the vicinity of their coupled parts.

12. Amplifier according to any one of Claims 8 to 10, characterized in that the amplifying region is implanted solely in the main guide (11) in the vicinity of this intermediate region (33).

13. Amplifier according to any one of Claims 6 to 8, characterized in that it comprises two secondary guides (31, 32), the amplifying region of the main guide being arranged in the intermediate region at least in the uncoupled part of the main and secondary guides and between the two secondary guides.

14. Amplifier according to either one of Claims 12 and 13, characterized in that the main guide (11) in the amplifying region is made in a guide (33) having the shape of a spiral.

15. Amplifier according to Claim 2, characterized in that the guide of the first type has an upper layer comprising a central layer of index N surrounded by two layers of index N-6N ensuring lateral confinement, such that $\delta N \leq 5.10^{-2}$.

16. Laser utilizing an amplifier according to any one of Claims 1 to 15, characterized in that the amplifying region (40) is situated between two optical gratings (41, 42) which allow the amplified wavelength to be returned on itself.

FIG. 1

FIG. 2

EP 0 561 672 B1

33

31    32

$\lambda_p$    $\lambda_p$

$\lambda_s$    $\lambda_s$

FIG. 3

FIG. 5 a

16    18    11

FIG. 5 b

39

38

37

36

35

FIG. 4

FIG. 6

FIG. 7

FIG. 8

FIG. 9

FIG. 10